# EUROPEAN PATENT APPLICATION

(11) **EP 3 035 628 A1**
(43) Date of publication of application: **22.06.2016**
(21) Application number: 14307079.5
(22) Date of filing: 18.12.2014
(51) Int. Cl.: H04L 29/06, H04L 12/26

(54) **Method for analyzing a bitrate of user traffic of a data communication over a data communications line, and related devices**

(71) Applicant: ALCATEL LUCENT, 92100 Boulogne-Billancourt (FR)
(72) Inventor: Dupuis, Nicolas, 6041 Gosselies (BE); Drooghaag, Benoît, 6041 Gosselies (BE)
(74) Representative: ALU Antw Patent Attorneys

(57) **Abstract**

The present invention relates to a method, a monitoring device, a related quality assessment station for analyzing a bitrate of user traffic of a data communication over a data communications line, said data communications line coupling a Network access Node and a customer premises equipment where the method comprises the step of generating an end user traffic signal by collecting measurements of said bitrate of the end-user traffic of said data communication over said data communications line followed by
determining a bitrate change from said end user traffic signal and finally determining a kind of service corresponding to said bitrate change in said end user traffic signal by selecting a kind of service from a plurality of services based on the bitrate associated with each kind of service where said associated bitrate best matches said bitrate change, each kind of service of said plurality of kinds of services being associated with a different predefined bitrate.

## Description

### FIELD OF THE INVENTION

The present invention, relates to a data communication over an access network communications line and, more particular but not exclusively to analyzing a bandwidth usage of user traffic of said data communication over a data communications line.

### TECHNICAL BACKGROUND OF THE INVENTION

With the increasing deployment of IPTV solutions, Video-On-Demand offers or Triple-play services, both the system performances and the customer support becomes more and more exigent, particularly on Digital Subscriber Lines (DSL).

Disturbances or impairments on a digital subscriber line may heavily impact the bit rate on a physical access link provided by the digital subscriber line. A decrease of the bit rate would adversely impact the quality of service of the above-mentioned high bit rate services. Hence, it is of prime importance to be able to remotely diagnose reasons of the disturbances and impairments and take actions to improve the performance of the link, in particular to increase the bit rate. Automatically evaluating the performance of digital subscriber lines and taking action to resolve problems on the physical links provided by these lines is also referred to as Dynamic Line Management (DLM). Applying dynamic line management on a wireline access network helps the operators of the network to gain in service quality as well as to save money and time by not involving human inventions for each and every type of request that may occur in case of disturbances and impairments in the wire line access network.

Besides increasing the signal bandwidth, additional measures have been implemented in order to increase the bit rate of digital subscriber lines. As a consequence, digital subscriber lines have become more sensible to disturbances and impairments and more advanced solutions for dynamic line management are needed.

Basically, dynamic line management monitors at least one parameter describing a physical characteristic of one or more digital subscriber lines and thereby dynamically accesses and monitors the stability of the line. A line is considered stable if transmission at a certain bit rate can be maintained during a sufficiently long time interval. Otherwise, the line is considered as unstable. Unstable lines typically have an unacceptable high rate of resynchronisations or an unacceptable high rate of coding violations or other transmission errors. If dynamic line management detects that a certain line is unstable, the maximum bit rate of that line may be reduced in order to stabilize that line.

In order to be as close as possible from the optimal throughput, i.e. reaching the maximum amount of guaranteed bitrate with the best Quality of Service QoS or Quality of Experience QoE, improvements in terms of QoE or QoS estimation can be done.

Currently, in the context where alternative content or service distributors emerge (YouTube, NetFlix, InternetTVs), where the user interfaces get multiplied (several set-top boxes at home, but also smart TV's, tablets, etc), some extra flexibility is offered (multiple recorded channels), not only the classical IPTV stream is available, but rather several of them together with alternative SD/HD streams proposed over-the-top by Youtube or Netflix. In that context, relying on the end-user service subscription over his operator to decide about a general quality of service assessment is weak, not always reflecting the reality and for sure not optimal.

In order to obtain the maximum amount of guaranteed bitrate with the best Quality of Service QoS or Quality of Experience QoE, it is relevant to be aware of the current end-user traffic usage.

Currently, the end-user traffic is just monitored and visually presented but there is no usage nor on-top processing on it, and the current monitoring implementation, is an on-demand mechanism which is not automatically triggered or initiated.

Currently no means are available to reliably estimate the actual throughput of such a data communication over a data communications line (of an access network (such as a DSL system) and as a consequence it is not possible to make an appropriate Quality of Service estimate.

### SUMMARY OF THE INVENTION

An objective of embodiments of the present invention is to provide with a method and related devices of the above known type but wherein the estimation of the actual bitrate of a data communication over a data communications line is improved supporting an improved Quality of Service estimation.

According to an embodiment of the present invention a method for analyzing a bitrate of user traffic of a data communication over a data communications line, said data communications line coupling a Network access Node and a customer premises equipment, said method comprising the steps of:
a. generating an end user traffic signal by collecting measurements of said bitrate of the end-user traffic of said data communication over said data communications line, wherein said method further comprises the steps of:
b. determining a bitrate change from said end user traffic signal; and
c. determining a kind of service corresponding to said bitrate change in said end user traffic signal by selecting a kind of service from a plurality of services based on the bitrate associated with each kind of service where said associated bitrate best matches said bitrate change, each kind of service of said plurality of kinds of services being associated with a different predefined bitrate.

Another embodiment of the method of the present invention relates to the method according to claim 1, wherein said kind of service may include at least one of:
- High speed Internet stream;
- IPTV High density television stream,
- IPTV Standard definition television stream,
- H.264/AVC stream;
- 3D stream
- Ultra high definition Television stream.

Still another embodiment of the method of the present invention relates to the method according to claim 1, wherein said method further comprises between step a. and step b. the step of:
d. generating a smoothened end user traffic signal by smoothing said measurements of said bitrate of said end-user traffic of said data communication over said data communications line and wherein said step of determining said bitrate change is based on said smoothened end user traffic signal.

Another embodiment of the method of the present invention relates to the method according to claim 3, wherein said step of generating a smoothened end user traffic signal is performed by means of computing a sliding minimum on said measurements of said bitrate of said end-user traffic of said data communication over said data communications line.

A further embodiment of the method of the present invention relates to the method according to claim 3, wherein said step of generating a smoothened end user traffic signal is performed of applying median sliding windows on said measurements of said bitrate of said end-user traffic of said data communication over said data communications line.

Even a further embodiment of the method of the present invention relates to the method according to claim 3, wherein said method further comprises the step of:
e. generating an inerted end user traffic signal by inerting the tracking of said smoothened end user traffic signal and wherein said step of determining said bitrate change is based on said inerted end user traffic signal.

Another embodiment of the method of the present invention relates to the method according to any of claims 4 to 6, wherein said method further comprises the step of:
f. compensating a delay introduced during either one of the steps .d and .e by means of inverse processing said end user traffic signal based on settings used during said respective steps of generating a smoothened end user traffic signal and /or generating an inerted end user traffic signal

A further embodiment of the method of the present invention relates to the Monitoring device, configured to analyze a bitrate of user traffic of a data communication over a data communications line, said data communications line coupling a Network access Node and a customer premises equipment, said Monitoring device, being configured to:
a. generating an end user traffic signal by collecting measurements of said bitrate of the end user data traffic of said data communication over said data communications line, and wherein said Monitoring device further is configured to:
b. determine a bitrate change from said end user traffic signal; and
c. determine a kind of service corresponding to said bitrate change in said end user traffic signal by selecting a kind of service from a plurality of services based on the bitrate associated with each kind of service where said associated bitrate best matches said bitrate change, each kind of service of said plurality of kinds of services being associated with a different predefined bitrate.

Still a further embodiment of the method of the present invention relates to the Monitoring device, according to claim 9, wherein said Monitoring device, further is configured to execute a method according to any of claims 2 to 7.

A further embodiment of the method of the present invention relates to the Quality assessment station for assessing a Quality of Service of a data communication over a data communications line, said data communications line coupling a Network access Node and a customer premises equipment, wherein said Quality assessment station comprises a Monitoring device, according to any of the claims 8 and 9.

A final embodiment of the method of the present invention relates to a Computer program product, preferably a computer readable storage medium, comprising a computer program that is programmed for executing a method according to any of claims 1 to 7 when run on a computer.

In this way, by first determining a bitrate change from the end user traffic signal that is based on the collected measurements of said bitrate of the end-user traffic and subsequently determining a kind of service that corresponds to the determined bitrate change in the end user traffic signal, by selecting the kind of service from a plurality of services based on the bitrate associated with each kind of service, where the associated bitrate best matches the determined bitrate change, in the measurements of said bitrate of the end-user traffic, each kind of service of said plurality of kinds of services being associated with a different predefined bitrate.

Based on the comparison of the bitrate change of the end-user data traffic with the associated bitrate of each of the multimedia services, the corresponding service is matched to the bitrate change of the end-user traffic. Hence, the determined bitrate change of the end-user data traffic corresponds to the turning on or turning-off of the meant service where the bitrate change value corresponds to the bitrate value required for the meant service.

As an example: in case the determined bitrate change equals approximately 8 Mbit/s the corresponding service turned on or -off corresponds to an IPTV-HD stream, an in case of approximately 4 Mbit/s this service most probably will correspond to a IPTV-SD stream.

Due to the improved service recognition there is an improved basis for making Quality of Experience and Quality of Service estimations. Based on the recognition of the kind of service used by the end-user the Quality of Service estimations can be performed better. Based on the improved Quality of Service estimations the physical line parameters can be adapted to improve the service. Indeed, criterions (definitions and/or threshold) to assess and state about a GOOD or DEGRADED Quality of Service are not identical and depend on the SERVICE in use. For instance, amount of errors tolerated while experiencing InternetTV should be much lower than while only requesting data during surfing sessions. Also, constraints about throughput (bandwidth) is usually higher in the case of video streams sessions (IPTV) than for voice (VoIP). Being able to identify and characterize the SERVICE in-use by the end-user allows therefore to dynamically adapt these criterions. At the end, this allows some QoS/performance optimization systems, like Dynamic Line Management, to take much accurate actions, depending therefore on the service in-use.

A further embodiment of the present invention is that the kind of service may include at least one of:
- High speed Internet stream;
- IPTV High density television stream,
- IPTV Standard definition television stream,
- H.264/AVC stream;
- 3D stream
- Ultra high definition Television stream.

Each of these kinds of services typically are assigned/configured a bitrate that characterizes the kind of multimedia service. An IPTV-HD stream typically has been configured as around 8 Mbits/s and an IPTV-SD stream around 4 Mbits/s with a tolerance approximately of 1.5 Mbits/s.

A High speed Internet stream typically is configured to be smaller than 3 MBit/s, the - H.264/AVC stream typically requires a bandwidth of 6.66Mbit/s, a 3D stream typically requires a bandwidth of 12.5 Mbit/s and an Ultra high definition Television stream typically requires a bandwidth of 20MBit/s.

It is additionally to be noted that it is possible that each operator makes an own definition for the kind of services i.e. the streams (some operators have HD streams of 6.6 Mbits/s, some others at 8, some other at 12.5, etc). This should be configurable by the operator. The operator may maintain a list with all kinds of services to be exploited and consequently is to be recognized.

Based on the comparison of the bit rate change of the end-user data traffic with the associated bitrate of each of the services, the corresponding service is matched with the bitrate change of the end-user data traffic. Hence the bitrate change of the end-user data traffic corresponds to the turning on or turning off of the meant service where the change of bit rate corresponds to the bitrate required for the meant service. For example in case the determined bitrate change equals approximately 8 Mbit/s the corresponding service turned on or turned off corresponds to an IPTV-HD stream, an in case of approximately 4 Mbit/s this service most probably will correspond to a IPTV-SD stream.

An another embodiment of the method of the present invention relates to the method according to claim 1, wherein said method further comprises between step a. and step b. the step of:
d. generating a smoothened end user traffic signal by performing smoothening on said measurements of said bitrate of said end-user traffic of said data communication over said data communications line and wherein said step of determining said bitrate change is based on said smoothened end user traffic signal.

Indeed, by applying smoothing techniques, in the field of signal processing, on the measurements of the bitrate of the end-user traffic of the data communication over the data communications line, punctual peaks are removed from the measurements of the bitrate of the end-user traffic of the data communication over the data communications.

In other words, in the step of smoothing, peaks from said measurements of said bitrate of the end-user traffic of said data communication over said data communications line are filtered out, hence a smoothened measurement of said bitrate of the end-user traffic of said data communication over said data communications line results.

Such smoothing techniques may include signal processing methods like computation of the sliding minimum or the media sliding window punctual peaks in the measurements of the bitrate of the end-user traffic of the data communication over the data communications

The application of this smoothing by removing the peaks from the measurements of the bitrate of the end-user traffic of the data communication over the data communications line results in a gain in robustness and accuracy in assessing the minimal traffic requested around the current period, i.e. the traffic (bandwidth) needed to sustain the requested data streams (during either internet data, VoIP or video sessions, or some combinations of them).

This step is applied for improving the multimedia service detection by removing peaks in the measured throughput of the end-user data traffic in order to improve the distinguishing between different kinds of services such as between an HSI service and IPTV-SD service.

Subsequently, the step of determining said bitrate change is based on said smoothened end user traffic signal.

Another further embodiment of the present invention is that the step of generating a smoothened end user traffic signal is performed by means of computing a sliding minimum on said measurements of said bitrate of said end-user traffic of said data communication over said data communications line.

Indeed, some well-known filtering techniques in the field of signal processing consists, for instance, of using filtering on sliding-windows. For instance, a sliding-mean or a sliding-minimum, i.e. the minimum value over the last 3 measurements for instance, can be used. This allows to remove punctual peaks and to gain in robustness and accuracy in assessing the minimal traffic requested around the current period.

This step of filtering peaks from the measured traffic of the end-user data traffic facilitates to better distinguish therefore between services.

The application of the minimum computation by means of first performing a comparison of the new retrieved user's traffic data sample with respect to some previous samples in order to select the minimum among the current and some previous values. In the field of signal and image processing, this types of minimum sliding buffer is usually known as an "erosion" by a flat bar. This step is applied for improving the service detection by removing peaks in the measured throughput of the end-user data traffic in order to make improve the distinguishing between different services such as between an HSI service and IPTV-SD multi-service.

The application of this smoothing by removing the peaks from the measurements of the bitrate of the end-user traffic of the data communication over the data communications line results in a gain in robustness and accuracy in assessing the minimal traffic requested around the current period, i.e. the traffic (bandwidth) needed to sustain the requested data streams (during either internet data, VoIP or video sessions, or some combinations of them).

A further embodiment of the method of the present invention relates to the method according to claim 3, wherein said step of generating a smoothened end user traffic signal is performed of applying median sliding windows on said measurements of said bitrate of said end-user traffic of said data communication over said data communications line.

Indeed, another filtering technique in the field of signal processing consists, for instance, of using the median gliding windows technique being a technique consisting of following steps:

For instance, a sliding-mean or a sliding-minimum, i.e. the minimum value over the last 3 measurements for instance, can be used.

This technique also allows to remove punctual peaks and to gain in robustness and accuracy in assessing the minimal traffic requested around the current period.

Even a further embodiment of the method of the present invention relates to the method according to claim 3, wherein said method further comprises the step of:
e. generating an inerted end user traffic signal by inerting the tracking of said smoothened end user traffic signal and wherein said step of determining said bitrate change is based on said inerted end user traffic signal.

Indeed by adding some inertia to the measured throughput of the end-user data traffic of said data communication over said data communications line the fast changes in the measurements of said bitrate are removed or at least smoothened out. In this way the robustness of the data communication has been increased significantly.

Another embodiment of the method of the present invention relates to the method according to any of claims 4 to 6, wherein said method further comprises the step of:
f. compensating a delay introduced during either one of the steps .d and .e by means of inverse processing said end user traffic signal based on settings used during said respective steps of generating a smoothened end user traffic signal and /or generating an inerted end user traffic signal

In the steps of smoothening of the step said measurements of said bitrate of said end-user traffic of said data communication over said data communications line and/or during the step of inerting a tracking of said measurements of said bitrate of the end-user data traffic of said data communication over said data communications line a delay has been introduced. Therefore, in order to still further increase the robustness of the smoothened and or inerted end user traffic signal is compensated for the delay introduced during either one of the steps .d and .e by means of inverse processing of the end user traffic signal based on settings used during said respective steps of generating a smoothened end user traffic signal and /or generating an inerted end user traffic signal, i.e. generating a signal less sensitive to fast variations.

The effects and advantages of the apparatus and systems according to embodiments of the present invention are substantially the same, *mutatis mutandis,* as those of the corresponding methods according to embodiments of the present inventions.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. This means that there exists a path between an output of A and an input of B which may be a path including other devices or means.

### BRIEF DESCRIPTION OF THE DRAWINGS

The above and other objects and features of the invention will become more apparent and the invention itself will be best understood by referring to the following description of an embodiment taken in conjunction with the accompanying drawings wherein:
Fig. 1 represents the functional structure of a system configured to assess a Quality of Service of a data communication over a data communications line, said data communications line coupling a Network access Node DSLAM and a customer premises equipment CPE; and

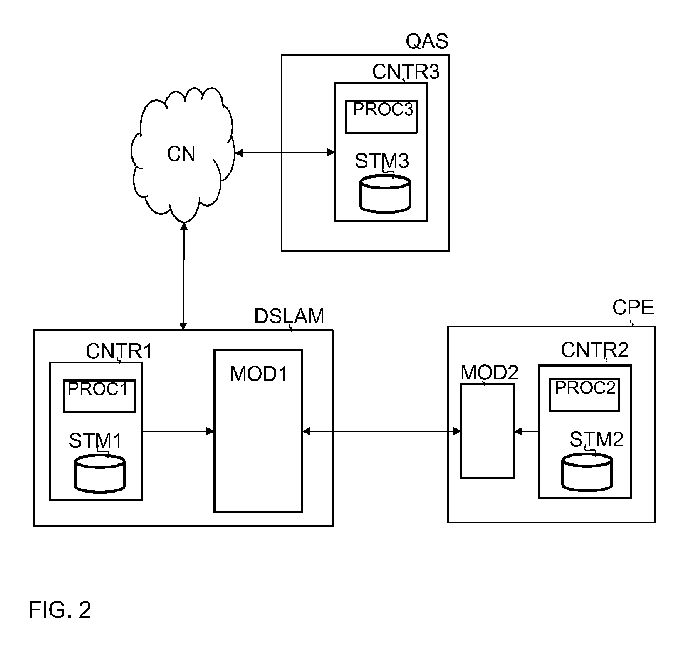

Fig. 2 represents a functional structure of the Network access Node DSLAM and the functional structure of customer premises equipment CPE and the functional structure of monitoring device; and
FIG.3 represents the end user traffic signal as generated from the collected samples (dotted line) and the smoothened the end user traffic signal (solid line).

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

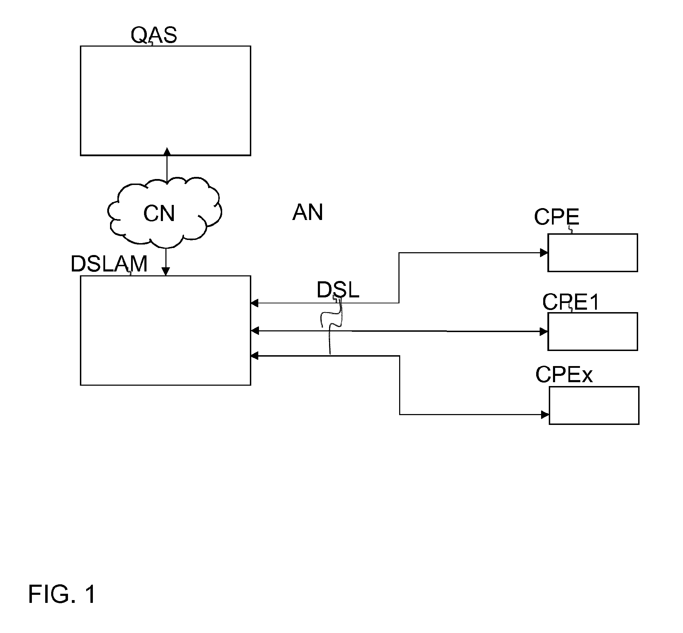

In the following paragraphs, referring to the drawing in FIG.1, an implementation of the system configured to analyze a bitrate of user traffic of a data communication over a data communications line, said data communications line coupling a Network access Node DSLAM and a customer premises equipment CPEaccording to an embodiment of the present invention is described. In the first paragraph, the elements of the meant system in Fig. 1 are described, and in a further paragraph, all connections between mentioned elements are defined. Subsequently, all relevant functional means of the mentioned Network access Node DSLAM and the functional structure of customer premises equipment CPE and the functional structure of monitoring device as presented in FIG.1 are described followed by a description of all interconnections.

In the succeeding paragraph the actual execution of the system is described.

A first essential element of the system is the network side termination node of the communications network DSL further referred to as access node DSLAM and a second end of the line DSL is connected to a terminal side termination node of the network. The terminal side termination node CPE may be part of customer premises equipment CPE, CPE1, CPEx of the network.

The communication network DSL may comprise telecommunication lines, at least one telecommunication line may have a pair of electrical conductors. A first end of the line is connected to a network side termination node DSLAM of the network, further referred to as access node DSLAM, and a second end of the line DSL is connected to a terminal side termination node of the network.

The terminal side termination node may be part of customer premises equipment CPE of the network.

In the shown embodiment, the telecommunication line DSL may be a Digital Subscriber Line DSL, such as VDSL2, ADSLx or the like. Consequently, the access node DSLAM may be a DSL Access Multiplexer DSLAM or another type of DSL access node. The terminal side termination node may be a DSL modem or include a DSL modem.

The access node DSLAM may have a first modem circuitry MOD1 to which the first end of the lines DSL is connected. In addition, the access node DSLAM has a first controller CNTR1 adapted for controlling the operation of the access node DSLAM. In an embodiment, the first controller CNTR1 is a programmable computer PROC1 comprising a processor, e. g. a microprocessor, and a storage element STM1, e.g. semiconductor memory.

The terminal side termination node may include a second modem circuitry MOD2 to which the second end of the line DSL is connected. Furthermore, the terminal side termination node may comprise a second controller CNTR2. The second controller CNTR2 may have the same basic configuration as the first controller CNTR1, i.e. the second controller CNTR2 may be a programmable computer and comprise a processor PROC2 and/or a storage element STM2.

Furthermore, the network may comprise an optional Quality assessment station QAS connected e. g. via an interconnection network CN to at least one of the nodes DSLAM , CPE, CPE1 CPEx such that the station Quality assessment station QAS is configured to communicate with at least one of the nodes DSLAM , CPE, CPE1 CPEx, preferably the access node DSLAM. The station QAS comprises a third controller CNTR3. The third controller CNTR3 may have the same basic configuration as the first controller CNTR1, i.e. the third controller CNTR3 may be a programmable computer and comprise a processor PROC and/or a storage element STM. In an exemplary embodiment, the station QAS may be a server computer, a personal computer, a handheld computer such as a PDA or cell phone, etc.

The method for analyzing a bitrate of user traffic of a data communication over a data communications line DSL may be executed at the Quality assessment station QAS. To this end, a computer program may be stored in the storage element STM3 of the third controller CNTR3. The computer program is programmed for executing the method when run by the processor PROC3 of the third controller CNTR3. However, it is to be noted that the method alternatively may also be executed on a different network element of the network e.g. on the access node DSLAM and the program may be stored on the storage element STM2 of the second controller CNTR2.

In an embodiment of the method according to the present invention this method comprises the step of collecting physical line data, i.e. the physical error free throughput information. The physical line data may, comprise the bitrate of the end user data traffic besides other kind of variables. The physical line data may be retrieved from a network element - such as an access node DSLAM or the customer side termination node CPE - that is connected directly to a line DSL. Preferably, the method comprises collecting the physical line data the bitrate of the end user data traffic from at least one of multiple network elements DSLAM, CPE, CPE1, CPEx of the network.

The physical line data, such as the bitrate of the end user data traffic is collected on a regular basis, e.g. once in each time interval of 15 minutes. The same may be valid for the further mentioned parameters of the physical line data.

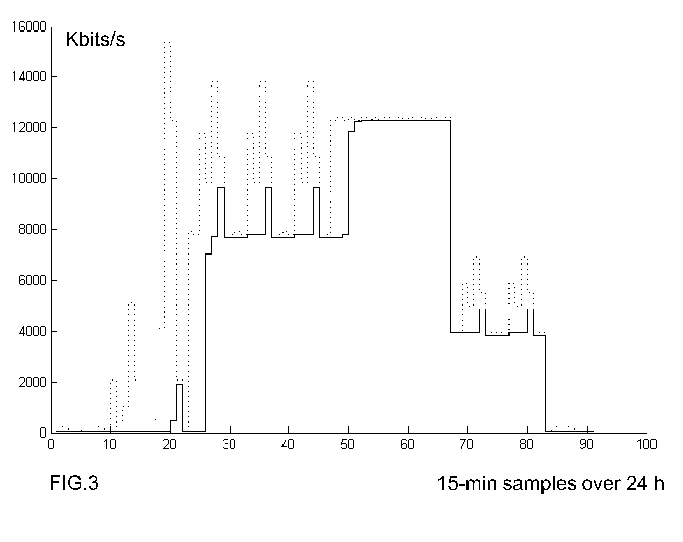

The monitoring device CNTR3 generates an end user traffic signal (see FIG. 3) by collecting measurements of said bitrate of the end-user data traffic of said data communication over said data communications line. Subsequently, the Monitoring device CNTR3 further determines a bitrate change from the end user traffic signal. At moment t=10 a first bitrate change occurs being a change of 2000 kbits/s.

The processor PROC3 of the monitoring device CNTR3 based on the bitrate change of 2000 kbit/s determines a kind of service corresponding to said bitrate change, i.e. 2000 kbit/s, in said end user traffic signal by selecting a kind of service from a plurality of services based on the bitrate associated with each kind of service where said associated bitrate best matches said bitrate change. Hence the storage means stores a table with following kinds of service with associated bitrate.
- High speed Internet stream: <3Mbit/s;
- IPTV High density television stream: 8Mbit/s,
- IPTV Standard definition television stream; 4 Mbit/s
- H.264/AVC stream: 6.66 Mbit/s;
- 3D stream 12.5Mbit/s
- Ultra high definition Television stream: 20 Mbit/s.
- Bluray streams: 30 Mbits/s
- Any other defined streams: 16.66 Mbits/s

Hence based on the values in the table the processor PROC3 of the monitoring device CNTR3 concludes that the High speed Internet stream is in the range of 2000kbit/s and hence based on this matching determines that at time t=10 High speed Internet stream is used. At t=11 there is another change in bitrate detected of -2000kbit/sec which supports the conclusion of use of High speed internet.

Subsequently at moment t=25 a further bitrate change occurs, being a change of 8000 Kbits/s. The processor PROC3 detects the bitrate change of 8000 kbit/s.

Subsequently, the processor of the monitoring device CNTR3 based on the bitrate change of 8000 kbit/s determines a kind of service corresponding to said bitrate change, i.e. 8000 kbit/s, in said end user traffic signal by selecting a kind of service from a plurality of services based on the bitrate associated with each kind of service where said associated bitrate best matches said bitrate change. Hence processor PROC3 based on bitrate change, i.e. 8000 kbit/s and the list with kinds of services determines that a - IPTV High density television stream: 8Mbit/s matches with the bitrate change as detected and hence concludes that the bitrate change relates to the turning on of an - IPTV High density television stream of 8Mbit/s.

At moment t=50 a further bitrate change occurs, being a change of 4000 Kbits/s. The processor PROC3 detects the bitrate change of 4000 kbit/s.

Subsequently, the processor of the monitoring device CNTR3 based on the bitrate change of 4000 kbit/s determines a kind of service corresponding to said bitrate change, i.e. 4000 kbit/s, in said end user traffic signal by selecting a kind of service from a plurality of services based on the bitrate associated with each kind of service where said associated bitrate best matches said bitrate change. Hence processor PROC3 based on bitrate change, i.e. 4000 kbit/s and the list with kinds of services determines that a - IPTV Standard definition television stream: 4 Mbit/s matches with the bitrate change as detected and hence concludes that the bitrate change relates to the turning on of an IPTV Standard definition television stream: 4 Mbit/s

At moment t=67 a change of -8000kbit/s occurs which is associated with the turning off of a - IPTV High density television stream: 8Mbit/s. Then an IPTV standard density television stream: 4Mbit/s stays active until t= 83. At t=83 the - IPTV active standard density television stream: 4Mbit/s is turned off as well leaving no activity at the line apart from some High speed Internet stream.

Further there is a number of peaks in the end user traffic signal which are caused by the presence of internet data traffic (browsing web pages, downloading data,...) or VoIP sessions on top of the video streams. This is common in the context of Triple Play. However, this traffic, even significant, is not persistent and do not require the same QoS in terms of sustainability of the bandwidth for instance. As we would like to recognize the most constraintful SERVICE from the sustainable requested bandwidth (typically generated by video streams), the processing steps tend to remove these transient traffic demands.

In order to increase the robustness of the end user traffic signal the peaks in the end user traffic signal, being of short duration are to be removed. A smoothened end user traffic signal is generated by performing smoothening on said measurements of said bitrate of said end-user traffic of said data communication over said data communications line. Subsequently, the step of determining the bitrate change is based on the smoothened end user traffic signal. The smoothened end user traffic signal allows to better assess the requested sustainable bandwidth. Hence all peaks, such as peaks at t=10, t=12, t= 18 and so on are removed from the generated smoothened end user traffic signal.

This smoothened end user traffic signal is generated under control of processor PROC3 by means of computing a sliding minimum on said measurements of said bitrate of said end-user traffic of said data communication over said data communications line.

Indeed, some well-known filtering techniques in the field of signal processing consist, for instance, of using filtering on sliding-windows. For instance, a sliding-mean or a sliding-minimum, i.e. the minimum value over the last 3 measurements for instance, can be used. This allows to remove punctual peaks and to gain in robustness and accuracy in assessing the minimal traffic requested around the current period.

This can be technically achieved by filtering the end-user traffic with a sliding-filter computing the minimum value of this sliding window. In the domain of signal processing, that usually falls under the generic terms of "eroding" the signal by a sliding bar.

This step of filtering peaks from the measured traffic of the end-user data traffic facilitates to better distinguish/discriminate therefore between services.

Alternatively, this smoothened end user traffic signal is generated under control of processor PROC3 by means of applying median sliding windows on said measurements of said bitrate of said end-user traffic of said data communication over said data communications line.

This can be technically achieved by filtering the end-user traffic with a sliding-filter computing the median value of this sliding window. In practice, this type of filter makes use of a sliding window on which the median value is identified. Formally, this means for a given time t, an amount of L previous signal samples are stored in a buffer (window of size L) and, from them, the median value (percentile 50 instance) is taken. This value is used as the output signal value for this time t. A similar operation is computed again at time t+1, t+2, etc. producing an output signal being a processing of the input signal.

Subsequently, the step of determining the bitrate change is based on the smoothened end user traffic signal.

In order to further increase the robustness of the end user traffic signal the peaks in the end user traffic signal, being of short duration are to be removed. For this purpose an inerted end user traffic signal, i.e. generating a signal less sensitive to fast variations, is generated by inerting the tracking of said smoothened end user traffic signal and wherein said step of determining said bitrate change is based on said inerted end user traffic signal.

Subsequently, the step of determining the bitrate change is based on the inerted end user traffic signal which signal is made more smooth and comprising less fast signal changes allowing better recognition bitrate changes wit associated service.

Formally, this inerted user traffic can be obtained by using, for instance, a recursive signal processing filter (IIR filter: Infinite Impulse Response filter). In that case, older signal value gets forgotten depending on a forgetting factor. Depending on its value, older value are fastly (reactive) or slowly (inertia) forgotten. Having more inertia allows to be robust to unwanted changes from the end-user traffic signal (for instance while rebooting a decoder). Notice as well that adding some inertia introduces a delay in the service recognition.

Finally, In order to still further increase the robustness of the smoothened and or inerted end user traffic signal is compensating for the delay introduced during either one of the steps .d and .e by means of inverse processing said end user traffic signal based on settings used during said respective steps of generating a smoothened end user traffic signal and /or generating an inerted end user traffic signal, i.e. generating a signal less sensitive to fast variations.

As mentioned above, processing the end-user traffic signal or adding inertia introduces a delay in the service identification process. As this delay has been introduced because of these processing methods and is therefore known, determination of service across time can be adjusted in order to compensate for this delay. In other words, if a service gets recognize from the processed curve at some point of time, this service would have been present physically before because either the filtering or the inertia steps introduced a delay. In practice, knowing the length of the filters (minimum/median) and/or the forgetting factor allow to precisely state about the introduced delay for recognition and therefore to compensate for it.

Due to the improved service recognition there is an improved basis for making Quality of Experience and Quality of Service estimations. Based on the recognition of the kind of service used by the end-user the Quality of Service estimations can be performed better. Based on the improved Quality of Service estimations the physical line parameters can be adapted to improve the service. Indeed, criterions (definitions and/or threshold) to assess and state about a GOOD or DEGRADED Quality of Service are not identical and depend on the SERVICE in use. For instance, amount of errors tolerated while experiencing InternetTV should be much lower than while only requesting data during surfing sessions. Also, constraints about throughput (bandwidth) is usually higher in the case of video streams sessions (IPTV) than for voice (VoIP). Being able to identify and characterize the SERVICE in-use by the end-user allows therefore to dynamically adapt these criterions. At the end, this allows some QoS or performance optimization systems, like Dynamic Line Management, to take much accurate actions, depending therefore on the service in-use.

It is to be noted that although an embodiment of the present invention relates to a DSL access network the present invention may be implemented in other (access) networks such as cable networks, Power-Line Communication network (PLC), Wireless or GPON.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. A method for analyzing a bitrate of user traffic of a data communication over a data communications line, said data communications line coupling a Network access Node (DSLAM) and a customer premises equipment (CPE), said method comprising the steps of:
a. generating an end user traffic signal by collecting measurements of said bitrate of the end-user traffic of said data communication over said data communications line, wherein said method further comprises the steps of:
b. determining a bitrate change from said end user traffic signal; and
c. determining a kind of service corresponding to said bitrate change in said end user traffic signal by selecting a kind of service from a plurality of services based on the bitrate associated with each kind of service where said associated bitrate best matches said bitrate change, each kind of service of said plurality of kinds of services being associated with a different predefined bitrate.

2. Method according to claim 1, wherein said kind of service may include at least one of:
- High speed Internet stream;
- IPTV High density television stream,
- IPTV Standard definition television stream,
- H.264/AVC stream;
- 3D stream
- Ultra high definition Television stream.

3. Method according to claim 1, wherein said method further comprises between step a. and step b. the step of:
d. generating a smoothened end user traffic signal by performing smoothening on said measurements of said bitrate of said end-user traffic of said data communication over said data communications line and wherein said step of determining said bitrate change is based on said smoothened end user traffic signal.

4. Method according to claim 3, wherein said step of generating a smoothened end user traffic signal is performed by means of computing a sliding minimum on said measurements of said bitrate of said end-user traffic of said data communication over said data communications line.

5. Method according to claim 3, wherein said step of generating a smoothened end user traffic signal is performed of applying median sliding windows on said measurements of said bitrate of said end-user traffic of said data communication over said data communications line.

6. Method according to claim 3, wherein said method further comprises the step of:
e. generating an inerted end user traffic signal by inerting the tracking of said smoothened end user traffic signal and wherein said step of determining said bitrate change is based on said inerted end user traffic signal.

7. Method according to any of claims 4 to 6, wherein said method further comprises the step of:
f. compensating a delay introduced during either one of the steps .d and .e by means of inverse processing said end user traffic signal based on settings used during said respective steps of generating one of a smoothened end user traffic signal and generating an inerted end user traffic signal

8. Monitoring device (CNTR1, CNTR2, CNTR3), configured to analyze a bitrate of user traffic of a data communication over a data communications line (DSL), said data communications line coupling a Network access Node (DSLAM) and a customer premises equipment (CPE), said Monitoring device (CNTR1, CNTR2, CNTR3), being configured to:
a. generating an end user traffic signal by collecting measurements of said bitrate of the end-user data traffic of said data communication over said data communications line, and wherein said Monitoring device (CNTR1, CNTR2, CNTR3) further is configured to:
b. determine a bitrate change from said end user traffic signal; and
c. determine a kind of service corresponding to said bitrate change in said end user traffic signal by selecting a kind of service from a plurality of services based on the bitrate associated with each kind of service where said associated bitrate best matches said bitrate change (in said measurements of said bitrate of the end-user traffic), each kind of service of said plurality of kinds of services being associated with a different predefined bitrate.

9. Monitoring device (CNTR1, CNTR2, CNTR3), according to claim 9, wherein said Monitoring device (CNTR1, CNTR2, CNTR3), further is configured to execute a method according to any of claims 2 to 7.

10. Quality assessment station (QAS) for assessing a Quality of Service of a data communication over a data communications line, said data communications line coupling a Network access Node (DSLAM) and a customer premises equipment (CPE), wherein said Quality assessment station (QAS) comprises a Monitoring device (CNTR1, CNTR2, CNTR3), according to any of the claims 8 and 9.

11. Computer program product, preferably a computer readable storage medium (STM), comprising a computer program that is programmed for executing a method according to any of claims 1 to 7 when run on a computer (PROC1, PROC2, PROC3).
